# EUROPEAN PATENT APPLICATION

(11) **EP 4 629 610 A1**
(43) Date of publication of application: **08.10.2025**
(21) Application number: 25165521.3
(22) Date of filing: 24.03.2025
(51) Int. Cl.: H04N 7/15, G06T 13/40, G06T 17/00, H04L 67/131

(54) **METHODS AND SYSTEMS FOR REAL-TIME LIVE TELEPRESENCE WITH DIGITAL AVATAR OF REMOTE PERSON**

(30) Priority: 27.03.2024 IN 202421024490
(71) Applicant: Tata Consultancy Services Limited, Maharashtra (IN)
(72) Inventor: Bhattacharyya, Abhijan, 700027 Kolkata, West Bengal (IN); MAITY, Soumyadip, 700160 Kolkata, West Bengal (IN); SAU, Ashis, 700160 Kolkata, West Bengal (IN)
(74) Representative: Goddar, Heinz J.

(57) **Abstract**

Real-time human motion capture, real-time human motion data transmission and the data rendering are the main challenges of the typical telepresence application. The present disclosure presents a maker-less 3-D digital human-based bandwidth-efficient Telepresence solution called Tele-avatar. The methods and systems of the present disclosure divide into an initialization phase and a live rendering phase. **In** the initialization phase, the digital avatar model is initialized and the same is conveyed to the rendering system. The initialization is done through parametric human model creation. This digital avatar model is then transmitted to the visual rendering device of the human observer for subsequent rendering. **In** the live rendering phase, the changes in body postures and facial expressions over time of the remote human presenter are transmitted to the visual rendering device of the human observer in real-time for final augmentation with the live view captured in the visual rendering device.

## Description

### CROSS-REFERENCE TO RELATED APPLICATIONS AND PRIORITY

The present application claims priority to Indian application no. 202421024490, filed on March 27, 2024.

### TECHNICAL FIELD

The disclosure herein generally relates to telepresence, and, more particularly, to methods and systems for real-time live telepresence with digital avatar of remote person.

### BACKGROUND

Telepresence systems have been found to have important applications in many areas such as product demonstration in merchandise, education, and so on. Real-time human motion capture, real-time human motion data transmission and the data rendering are three main aspects of the typical telepresence application. Accurately inferring human 3-dimensional (3-D) pose and rendering the inference onto a digital human model in real-time is still an ongoing research challenge. Existing real-time motion capture products (mainly targeted for 3-D content creators) use specialized body sensor suits to transmit the human body pose information explicitly. This enhances the cost as well as reduces the flexible democratized use of the application. Further, the real-time human motion data transmission and the data rendering requires large amount of network bandwidth.

### SUMMARY

Embodiments of the present disclosure present technological improvements as solutions to one or more of the above-mentioned technical problems recognized by the inventors in conventional systems.

In an aspect, a processor-implemented method for real-time live telepresence with digital avatar of remote person is provided. The method including the steps of: initiating a session for real-time live telepresence of a remote human presenter in an environment of a human observer, wherein an acquisition device is located in the environment of the remote human presenter and the human observer comprises a visual rendering device; generating at an initial phase, an initial digital avatar of the remote human presenter, using a 3-dimensional (3-D) human model, through the acquisition device; transmitting at the initial phase, the initial digital avatar of the remote human presenter along with an audio to the visual rendering device of the human observer through a public cloud infrastructure, wherein the initial digital avatar of the remote human presenter is subsequently rendered in the visual rendering device of the human observer to obtain a rendered digital avatar of the remote human presenter along with the audio at each instance; estimating at a live rendering phase in real-time, a temporally consistent 3-D human pose and shape motion information of the remote human presenter and one or more environmental parameters of the environment of the remote human presenter, from a frame sequence obtained through the acquisition device; encoding in real-time, the temporally consistent 3-D human pose and shape motion information of the remote human presenter and the one or more environmental parameters of the environment of the remote human presenter, using an encoding technique, to obtain an encoded motion information of the remote human presenter and an encoded environmental parameter information as a time-series data, wherein the encoding technique encodes and converts the temporally consistent 3-D human pose and shape motion information and the one or more environmental parameters of the environment of the remote human presenter into a data interchange format comprising one or more name-value pairs; transmitting in real-time, the encoded motion information of the remote human presenter and the encoded environmental parameter information, to the visual rendering device of the human observer, through the public cloud infrastructure using a predefined packet semantics and a predefined network topology; receiving in real-time, the encoded motion information of the remote human presenter and the encoded environmental parameter information, at the visual rendering device of the human observer; and decoding and feeding at the live-rendering phase in real-time, the encoded motion information of the remote human presenter to a present state of the rendered digital avatar of the remote human presenter and the encoded environmental parameter information, in the visual rendering device of the human observer to mimic the present state and the environment of the remote human presenter in the environment of the human observer.

In another aspect, a system for real-time live telepresence with digital avatar of remote person is provided. The system includes: a memory storing instructions; one or more input/output (I/O) interfaces; an acquisition device; and one or more hardware processors coupled to the memory via the one or more I/O interfaces, wherein the one or more hardware processors are configured by the instructions to: initiate a session for real-time live telepresence of a remote human presenter in an environment of a human observer, wherein an acquisition device is located in the environment of the remote human presenter and the human observer comprises a visual rendering device; generate at an initial phase, an initial digital avatar of the remote human presenter, using a 3-dimentsional (3-D) human model, through the acquisition device; transmit at the initial phase, the initial digital avatar of the remote human presenter along with an audio to the visual rendering device of the human observer through a public cloud infrastructure, wherein the initial digital avatar of the remote human presenter is subsequently rendered in the visual rendering device of the human observer to obtain a rendered digital avatar of the remote human presenter along with the audio at each instance; estimate at a live rendering phase in real-time, a temporally consistent 3-D human pose and shape motion information of the remote human presenter and one or more environmental parameters of the environment of the remote human presenter, from a frame sequence obtained through the acquisition device; encode in real-time, the temporally consistent 3-D human pose and shape motion information of the remote human presenter and the one or more environmental parameters of the environment of the remote human presenter, using an encoding technique, to obtain an encoded motion information of the remote human presenter and an encoded environmental parameter information as a time-series data, wherein the encoding technique encodes and converts the temporally consistent 3-D human pose and shape motion information and the one or more environmental parameters of the environment of the remote human presenter into a data interchange format comprising one or more name-value pairs; transmit in real-time, the encoded motion information of the remote human presenter and the encoded environmental parameter information, to the visual rendering device of the human observer, through the public cloud infrastructure using a predefined packet semantics and a predefined network topology; receive in real-time, the encoded motion information of the remote human presenter and the encoded environmental parameter information, at the visual rendering device of the human observer; and decode and feed at the live-rendering phase in real-time, the encoded motion information of the remote human presenter to a present state of the rendered digital avatar of the remote human presenter and the encoded environmental parameter information, in the visual rendering device of the human observer to mimic the present state and the environment of the remote human presenter in the environment of the human observer.

In yet another aspect, there are provided one or more non-transitory machine-readable information storage mediums comprising one or more instructions which when executed by one or more hardware processors cause: initiating a session for real-time live telepresence of a remote human presenter in an environment of a human observer, wherein an acquisition device is located in the environment of the remote human presenter and the human observer comprises a visual rendering device; generating at an initial phase, an initial digital avatar of the remote human presenter, using a 3-dimensional (3-D) human model, through the acquisition device; transmitting at the initial phase, the initial digital avatar of the remote human presenter along with an audio to the visual rendering device of the human observer through a public cloud infrastructure, wherein the initial digital avatar of the remote human presenter is subsequently rendered in the visual rendering device of the human observer to obtain a rendered digital avatar of the remote human presenter along with the audio at each instance; estimating at a live rendering phase in real-time, a temporally consistent 3-D human pose and shape motion information of the remote human presenter and one or more environmental parameters of the environment of the remote human presenter, from a frame sequence obtained through the acquisition device; encoding in real-time, the temporally consistent 3-D human pose and shape motion information of the remote human presenter and the one or more environmental parameters of the environment of the remote human presenter, using an encoding technique, to obtain an encoded motion information of the remote human presenter and an encoded environmental parameter information as a time-series data, wherein the encoding technique encodes and converts the temporally consistent 3-D human pose and shape motion information and the one or more environmental parameters of the environment of the remote human presenter into a data interchange format comprising one or more name-value pairs; transmitting in real-time, the encoded motion information of the remote human presenter and the encoded environmental parameter information, to the visual rendering device of the human observer, through the public cloud infrastructure using a predefined packet semantics and a predefined network topology; receiving in real-time, the encoded motion information of the remote human presenter and the encoded environmental parameter information, at the visual rendering device of the human observer; and decoding and feed at the live-rendering phase in real-time, the encoded motion information of the remote human presenter to a present state of the rendered digital avatar of the remote human presenter and the encoded environmental parameter information, in the visual rendering device of the human observer to mimic the present state and the environment of the remote human presenter in the environment of the human observer.

In an embodiment, generating at the initial phase, the initial digital avatar of the remote human presenter using the 3-D human model through the acquisition device, comprises: capturing an image representation of the remote human presenter through the acquisition device located in the environment of the remote human presenter; estimating one or more normal maps from the image representation using the 3-D human model; converting the one or more normal maps into one or more partial surfaces, using the 3-D human model; and adding one or more missing geometries to the one or more partial surfaces using the 3-D human model, to generate the initial digital avatar of the remote human presenter, wherein the one or more missing geometries are associated with (i) a texture, (ii) a body shape, and (iii) one or more wearable garments.

In an embodiment, estimating at the live rendering phase in real-time, the temporally consistent 3-D human pose and shape motion information of the remote human presenter from the frame sequence obtained through the acquisition device, comprises: selecting a set of consecutive frames within a temporal window, from the frame sequence obtained through the acquisition device; extracting one or more body-aware deep features from each of the set of consecutive frames; predicting one or more initial per-frame estimates comprising one or more body parameters of the remote human presenter and one or more device parameters of the acquisition device, from the associated one or more body-aware deep features; recovering one or more spatio-temporal features from the initial per-frame estimates, using one or more spatio-temporal feature aggregation techniques; and estimating the temporally consistent 3-D human pose and shape motion information of the remote human presenter, in real-time, from the one or more spatio-temporal features, using a motion estimation and refinement technique.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary application scenario of telepresence, in accordance with some embodiments of the present disclosure.
FIG. 2 is an exemplary block diagram of a system for real-time live telepresence with digital avatar of remote person, in accordance with some embodiments of the present disclosure.
FIG. 3 is an exemplary overall pipeline of the method 300 for real-time live telepresence with digital avatar of remote person, in accordance with some embodiments of the present disclosure.
FIGS. 4A through 4B illustrate exemplary flow diagrams of a processor-implemented method for real-time live telepresence with digital avatar of remote person, in accordance with some embodiments of the present disclosure.
FIG. 5 is a flowchart showing the steps for generating the initial digital avatar of the remote human presenter at the initial phase, in accordance with some embodiments of the present disclosure.
FIG. 6 is a flowchart showing the steps for estimating the temporally consistent 3-D human pose and shape motion information of the remote human presenter at the live rendering phase in real-time, in accordance with some embodiments of the present disclosure.
FIG. 7 is an exemplary communication framework for real-time live telepresence with digital avatar of remote person, in accordance with some embodiments of the present disclosure.
FIG. 8 shows real-time actions as visualized at consecutive time instants through the AR glass, in accordance with some embodiments of the present disclosure.
FIG. 9 is a graph showing an average latency (in seconds) through servers in different locations, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Consider a hypothetical, yet realistic future business story. XYZ Engineering Limited is a United States (US) based leading manufacturer of innovative gadgets to solve real-life problems and they operate in B2C (business to consumer) space. Some of their hi-grade products require demonstrations by specially skilled staff who also handle complex queries from the end-consumer during demonstrations. Their production center is in India and have only a few customer experience centers working also as retail outlets in the US. The XYZ Engineering Limited wants to now scale up its presence in UK and Canada for increasing the market reach and are planning to open new customer experience centers. However, due to a budget crunch, they are not able to hire and train enough staff to enable demonstration of the high-grade products to customers coming to their new stores. Thus, XYZ Engineering Limited has a paradoxical requirement whereby they would need to scale up their customer base with all their specialties, but they want to achieve that at a reduced operating expense (OpEx).

The XYZ Engineering Limited evaluated off-the-shelf Robotic Telepresence based solutions such as a Double Robot. The idea is to put a robot in each new store. Whenever a customer in one of those stores requires a specialized demonstration, a skilled demonstrator from the US store may log in to the robot and interact with the customer. However, the plan challenges because of multiple practical problems as below:
(i) A remote person's face appearing in a Telepresence robot screen does not create the exact in situ experience that the customer would like. The customer should feel like someone in person is touching the gadget and demonstrating while communicating by exchanging body gestures (along with verbal exchanges) like humans do in a face-to-face conversation. Maneuvering the Telepresence robot to the user's satisfaction is not likely.
(ii) The typical requirement may be achieved by futuristic humanoid robots. But those are yet to be fully available in the desired form factor and the cost of such robots would be too prohibitive for the company. The robots incur a significant capability expense (CapEx) which scales linearly with the number of deployments.
(iii) XYZ Engineering Limited wants to bring in an overall telepresence experience (wow factor) in the customer experience by any means and wants to be a future trend setter. Yet, the solution should be as democratized as possible with minimal infrastructure requirements at both ends (demonstrator and the remote store).

The present disclosure attempts to solve the above discussed challenges in state of art techniques with the methods and systems for real-time live telepresence with digital avatar of remote person. The present disclosure presents a technologically advanced maker-less 3-D digital human-based bandwidth-efficient Telepresence solution called Tele-avatar. The disclosed solution allows individuals (alternatively referred as human observers) to interact live with a remote person (alternatively referred as remote human presenter) through both verbal and non-verbal communication via the parametric digital human avatar of the remote human presenter through the visual rendering device. Using visual computing algorithms and communication techniques, the digital human avatar is rendered live in the premise of the second person (alternatively referred as human observer) using a single image representation such as a RGB image or a monocular image, and not requiring anybody-sensors. The system has a privacy advantage as the digital human avatar need not reveal the exact body of the remote human presenter and is just a digital self of the remote human presenter.

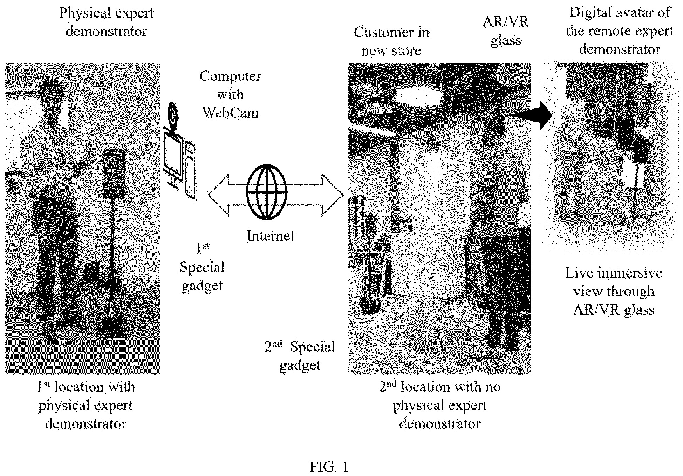

Tele-avatar is essentially a real-time 3-D virtual presence system with the live digital avatar of the remote human presenter. FIG. 1 illustrates an exemplary application scenario of telepresence for methods and systems of the present disclosure. The idea workflow is as below:
(i) User 'A' (human observer) enters a new store in UK and asks for demonstration of a special hi-grade gadget.
(ii) The UK store notifies a store in US to get a skilled demonstrator (remote human presenter) available.
(iii) The remote demonstrator 'D' (remote human presenter) logs into the system (laptop, or any mobile or tab) with a webcam, where the webcam is placed such that, it captures full body view of 'D'.
(iv) The UK store provides the visual rendering device such as an augmented reality/ virtual reality (AR/ VR) glass to 'A' through which 'A' also logs into the system and looks towards the gadget of interest.
(v) The system (laptop, or any mobile or tab) with the webcam captures visuals of 'A' and surroundings such as environmental parameters which are transmitted to 'D'.
(vi) 'A' sees a digital avatar of 'D' just next to the gadget.
(vii)'D' sees the normal visuals of 'A' on the console in real-time just like conventional video chat.

On the consumer side the experience is not just limited to AR/VR glasses. If the end customer is ready to trade-off the immersive experience, the avatar may also be ported to other compatible visual rendering devices such as smart phones, tables and even personal computer or laptops with webcam.

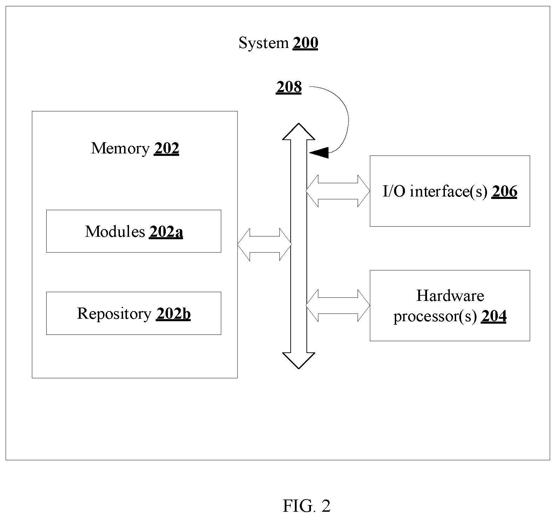

Referring now to the drawings, and more particularly to FIG. 2 through FIG. 9, where similar reference characters denote corresponding features consistently throughout the figures, there are shown preferred embodiments, and these embodiments are described in the context of the following exemplary systems and/or methods.

FIG. 2 is an exemplary block diagram of a system 200 (Tele-avatar) for real-time live telepresence with digital avatar of remote person, in accordance with some embodiments of the present disclosure. In an embodiment, the system 200 includes or is otherwise in communication with one or more hardware processors 204, communication interface device(s) or input/output (I/O) interface(s) 206, and one or more data storage devices or memory 202 operatively coupled to the one or more hardware processors 204. The one or more hardware processors 204, the memory 202, and the I/O interface(s) 206 may be coupled to a system bus 208 or a similar mechanism.

The I/O interface(s) 206 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 206 may enable the system 200 to communicate with other devices, such as web servers and external databases.

The I/O interface(s) 206 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 206 may include one or more ports for connecting a number of computing systems with one another or to another server computer. Further, the I/O interface(s) 206 may include one or more ports for connecting a number of devices to one another or to another server.

The one or more hardware processors 204 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 204 are configured to fetch and execute computer-readable instructions stored in the memory 202. In the context of the present disclosure, the expressions 'processors' and 'hardware processors' may be used interchangeably. In an embodiment, the system 200 can be implemented in a variety of computing systems, such as laptop computers, portable computers, notebooks, handheld devices, workstations, mainframe computers, servers, a network cloud and the like.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 202 includes a plurality of modules 202a and a repository 202b for storing data processed, received, and generated by one or more of the plurality of modules 202a. The plurality of modules 202a may include routines, programs, objects, components, data structures, and so on, which perform particular tasks or implement particular abstract data types.

The plurality of modules 202a may include programs or computer-readable instructions or coded instructions that supplement applications or functions performed by the system 200. The plurality of modules 202a may also be used as, signal processor(s), state machine(s), logic circuitries, and/or any other device or component that manipulates signals based on operational instructions. Further, the plurality of modules 202a can be used by hardware, by computer-readable instructions executed by the one or more hardware processors 204, or by a combination thereof. In an embodiment, the plurality of modules 202a can include various sub-modules (not shown in FIG. 2). Further, the memory 202 may include information pertaining to input(s)/output(s) of each step performed by the processor(s) 204 of the system 200 and methods of the present disclosure.

The repository 202b may include a database or a data engine. Further, the repository 202b amongst other things, may serve as a database or includes a plurality of databases for storing the data that is processed, received, or generated as a result of the execution of the plurality of modules 202a. Although the repository 202b is shown internal to the system 200, it will be noted that, in alternate embodiments, the repository 202b can also be implemented external to the system 200, where the repository 202b may be stored within an external database (not shown in FIG. 2) communicatively coupled to the system 200. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 202b may be distributed between the system 200 and the external database.

In an embodiment, the system 200 further includes a transmitter Tx 220 (not shown in FIG. 1), a receiver Rx 230 (not shown in FIG. 1), and a communication network 240 (not shown in FIG. 1), having the end-to-end transmission channel are present. The transmitter Tx 220 transmits the data through the communication network 240 and the receiver Rx 230 receives the transmitted data. The communication network 240 includes a public cloud infrastructure. In a typical telepresence scenario, the system of the remote human presenter may act as the transmitter Tx 220 and the system of the human observer may act as the receiver Rx 230.

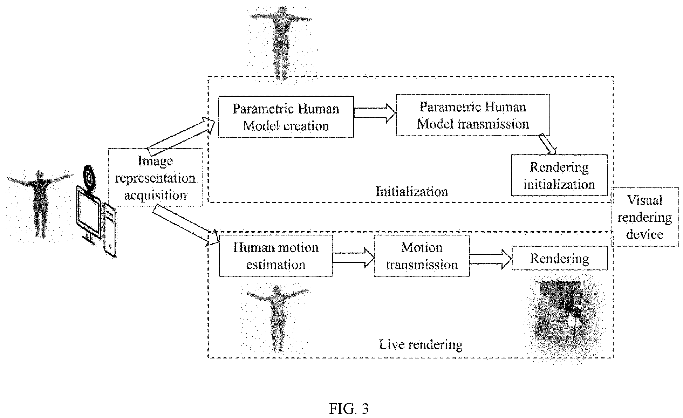

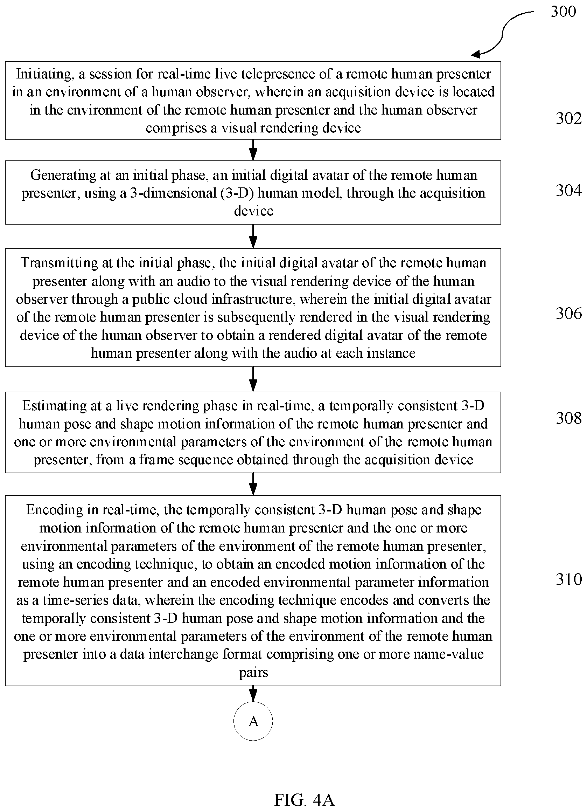

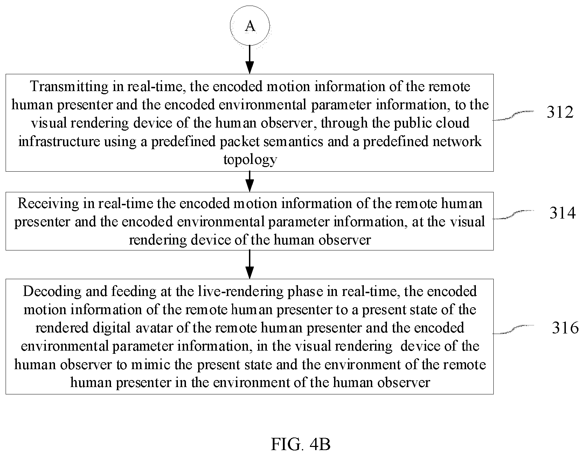

Referring to FIG. 3, FIGS. 4A through 4B, components and functionalities of the system 200 are described in accordance with an example embodiment of the present disclosure. For example, FIG. 3 is an exemplary overall pipeline of the method 300 for real-time live telepresence with digital avatar of remote person, in accordance with some embodiments of the present disclosure. As shown in FIG. 3, the overall pipeline is divided into two broad phases namely an initialization phase and a live rendering phase.

In the initialization phase, the digital avatar model is initialized and the same is conveyed to the rendering system. The initialization is done through parametric human model creation. This digital avatar model is then transmitted to the visual rendering device of the human observer for subsequent rendering. However, in the subsequent frames, the pipeline operates efficiently by solely capturing human motion data of the remote human presenter. The continuous transmission focuses exclusively on conveying the dynamic aspects of the model, such as movement and pose, optimizing data flow and ensuring a streamlined rendering process. This approach not only conserves bandwidth but also contributes to the real-time and interactive nature of the virtual experience. In case the remote human presenter (expert demonstrator) remains same in consecutive sessions then this can be a one-time activity and can be prestored in the visual rendering device. That way the overall commissioning time for the system 200 can be reduced in subsequent usages.

In the live rendering phase, the changes in body postures and facial expressions over time of the remote human presenter are transmitted to the visual rendering device of the human observer in real-time for final augmentation with the live view captured in the visual rendering device.

FIGS. 4A through 4B illustrate exemplary flow diagrams of a processor-implemented method 300 for real-time live telepresence with digital avatar of remote person, in accordance with some embodiments of the present disclosure. Although steps of the method 300 (of FIGS. 4A through 4B) including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more hardware processors 204 of the system 200 are configured to initiate a session for real-time live telepresence of the remote human presenter in an environment of the human observer. An acquisition device is located in the environment of the remote human presenter and the human observer includes the visual rendering device. In an embodiment, the acquisition device is an image acquisition device, a video acquisition device, an infrared (IR) senser, a thermal sensor or any other acquisition device that can acquire the image representation and motion movements of the remote human presenter. In an embodiment, the visual rendering device is any visual device that is capable of rendering and showing the rendered data to the human observer, such as an augmented reality (AR) device, virtual reality (VR) device, a personal computer, a mobile device such as a smart phone, personal digital assistance (PDA), and so on.

At step 304 of the method 300, the one or more hardware processors 204 of the system 200 are configured to generate an initial digital avatar of the remote human presenter, at the initial phase. The initial digital avatar of the remote human presenter is generated using a 3-D human model, through the acquisition device.

In an embodiment, the 3-D human model is a SMPL-X parametric human model for the parametric human model creation which is renowned for its holistic representation that includes body, face, and hands, coupled with realistic texture (10, 475 vertices and 54 joints including neck, jaw, eyeballs, and fingers). To create the SMPL-X model from image sequences, a conventional Explicit Clothed humans Optimized via Normal integration (ECON) is employed due to its capability to generate clothed human models with realistic texture, coupled with robust performance. The generation of a clothed human model begins with the estimation of front and back normal maps from the images. Subsequently, these normal maps are converted into front and back partial surfaces. Finally, ECON adeptly inpaints the missing geometry, resulting in a comprehensive and realistic representation of the human model. This technique enhances the fidelity of the SMPL-X model, ensuring that it accurately captures intricate details, including clothing and realistic textures, from the input image data.

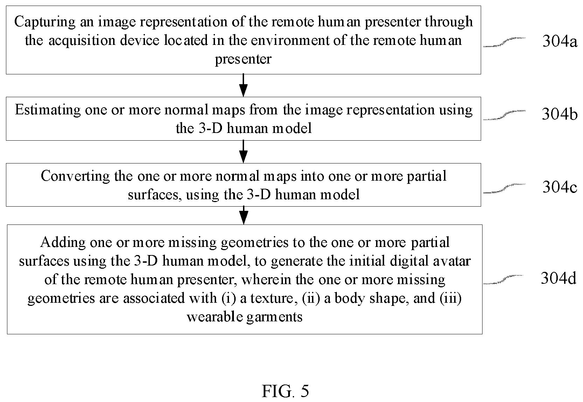

FIG. 5 is a flowchart showing the steps for generating the initial digital avatar of the remote human presenter at the initial phase, in accordance with some embodiments of the present disclosure. As shown in FIG. 5, generating at the initial phase, the initial digital avatar of the remote human presenter using the 3-D human model through the acquisition device is explained through steps 304a to 304d. At step 304a, an image representation of the remote human presenter is captured through the acquisition device located in the environment of the remote human presenter.

At step 304b, one or more normal maps are estimated from the image representation using the 3-D human model. At step 304c, the one or more normal maps estimated at step 304b are converted into one or more partial surfaces, using the 3-D human model.

Finally at step 304d, one or more missing geometries are added to the one or more partial surfaces using the 3-D human model, to generate the initial digital avatar of the remote human presenter. The one or more missing geometries are associated with (i) a texture of the remote human presenter, (ii) a body shape of the remote human presenter, (iii) one or more wearable garments of the remote human presenter, and so on. In an embodiment, one or more one or more wearable garments of the remote human presenter are the clothes and any other items worn by the remote human presenter.

At step 306 of the method 300, the one or more hardware processors 204 of the system 200 are configured to transmit the initial digital avatar of the remote human presenter along with an audio to the visual rendering device of the human observer through a public cloud infrastructure, at the initial phase. The initial digital avatar of the remote human presenter is subsequently rendered in the visual rendering device of the human observer to obtain a rendered digital avatar of the remote human presenter along with the audio at each instance. Thus, the initial digital avatar of the remote human presenter is then transmitted to the visual rendering device of the human observer for subsequent rendering. However, in the subsequent frames, the pipeline operates efficiently by solely capturing human motion data.

At step 308 of the method 300, the one or more hardware processors 204 of the system 200 are configured to estimate a temporally consistent 3-D human pose and shape motion information of the remote human presenter and one or more environmental parameters of the environment of the remote human presenter, at the live rendering phase in real-time. The temporally consistent 3-D human pose and shape motion information of the remote human presenter and one or more environmental parameters of the environment of the remote human presenter are estimated from a frame sequence obtained through the acquisition device. The frame sequence comprises a plurality of image frames that are captured by the acquisition device at each instance. In an embodiment, the one or more environmental parameters of the environment of the remote human presenter includes but are not limited to lighting, brightness, and so on.

Conventional single image based techniques demonstrate proficiency in predicting plausible outputs from static images, they face challenges in estimating temporally coherent and smooth 3-D human pose and shape across video sequences. This limitation arises from their inability to model the continuity of human motion over consecutive frames. To overcome this constraint, the present disclosure integrates the enhanced spatio-temporal context for human motion capture. This technique employs a comprehensive approach to extract temporally consistent 3-D human pose and shape from monocular video through enhanced spatio-temporal context.

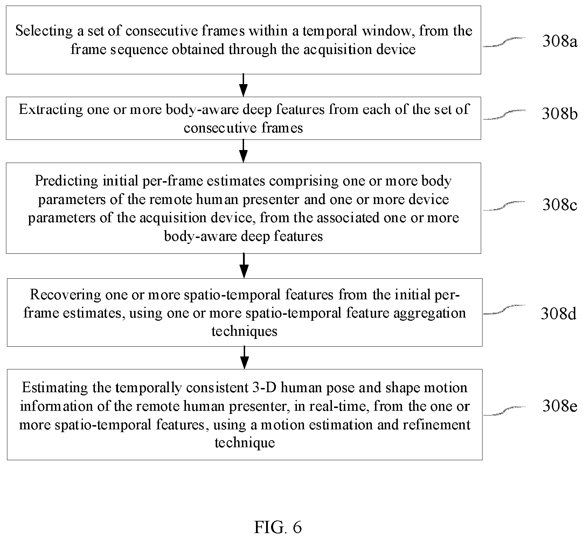

FIG. 6 is a flowchart showing the steps for estimating the temporally consistent 3-D human pose and shape motion information of the remote human presenter at the live rendering phase in real-time, in accordance with some embodiments of the present disclosure. As shown in FIG. 6, estimating at the live rendering phase in real-time, the temporally consistent 3-D human pose and shape motion information of the remote human presenter from the frame sequence is further explained through steps 308a to 308e.

At step 308a, a set of consecutive frames are selected within a temporal window, from the plurality of image frames present in the frame sequence obtained through the acquisition device. At step 308b, one or more body-aware deep features are extracted from each of the set of consecutive frames.

At step 308c, one or more initial per-frame estimates comprising one or more body parameters of the remote human presenter and one or more device parameters of the acquisition device, are predicted from the associated one or more body-aware deep features extracted in step 308b. In an embodiment, the one or more body parameters of the remote human presenter includes a body pose and a body shape. In an embodiment, the one or more device parameters of the acquisition device includes a pose of the acquisition device.

At step 308d, one or more spatio-temporal features from the initial per-frame estimates are recovered, using one or more spatio-temporal feature aggregation techniques. The one or more spatio-temporal feature aggregation techniques recover the enhanced spatio-temporal features. At step 308e, the temporally consistent 3-D human pose and shape motion information of the remote human presenter, are estimated in real-time, from the one or more spatio-temporal features recovered at step 308d, using a motion estimation and refinement technique. The motion estimation and refinement technique are utilized to achieve temporally consistent pose and shape estimation using these enhanced features.

The 3-D human model and the technique proves effective in capturing humans in motion, enabling accurate and temporally coherent estimation of 3-D human pose and shape from image sequences. By explicitly considering the continuity of human motion, it enhances realism and coherence in the captured human representation, overcoming limitations associated with single image-based techniques in dynamic scenarios.

At step 310 of the method 300, the one or more hardware processors 204 of the system 200 are configured to encode in real-time the temporally consistent 3-D human pose and shape motion information of the remote human presenter and the one or more environmental parameters of the environment of the remote human presenter estimated at step 308, to obtain an encoded motion information of the remote human presenter and an encoded environmental parameter information as a time-series data respectively. The encoding technique encodes and converts the temporally consistent 3-D human pose and shape motion information and the one or more environmental parameters of the environment of the remote human presenter into a data interchange format. The data interchange format includes one or more name-value pairs. More specifically, the temporally consistent 3-D human pose and shape motion information and the one or more environmental parameters of the environment of the remote human presenter are converted into the one or more name-value pairs. In an embodiment, the data interchange format is a JSON format.

While 3-D volumetric video transmission takes a huge bandwidth of the order of Mega Bits per second, the present disclosure transmits only the temporally consistent 3-D human pose and shape motion information and the one or more environmental parameters of the environment as a data frame which requires to transmit less than 1 kb of data for each frame which boils down to just a single packet transmission for a network with maximum transmission unit (MTU) size of 1KB. Thus, for a transmission rate of 10 frames per second, the network requires a data rate of less than 10 kbps. For this, a globally accessible communication infrastructure is created using a peer-to-peer (P2P) topology over HTTP/2 protocol. In an embodiment, the change in body and facial pose is encoded into JSON format. The session is hosted in the public cloud infrastructure to establish the P2P between the system with the webcam at the remote human presenter (demonstrator) end and the visual rendering device (such as VR headset (i.e., the AR/VR glass)) at the human observer (customer) end. A P2P relay is deployed at the server so that the systems can establish a connection even if they are behind a NATted router.

At step 312 of the method 300, the one or more hardware processors 204 of the system 200 are configured to transmit in real-time, the encoded motion information of the remote human presenter and the encoded environmental parameter information, to the visual rendering device of the human observer, through the public cloud infrastructure. A predefined packet semantics and a predefined network topology are employed to transmit the encoded motion information of the remote human presenter and the encoded environmental parameter information.

An exemplary packet semantics of JSON data format is mentioned below:

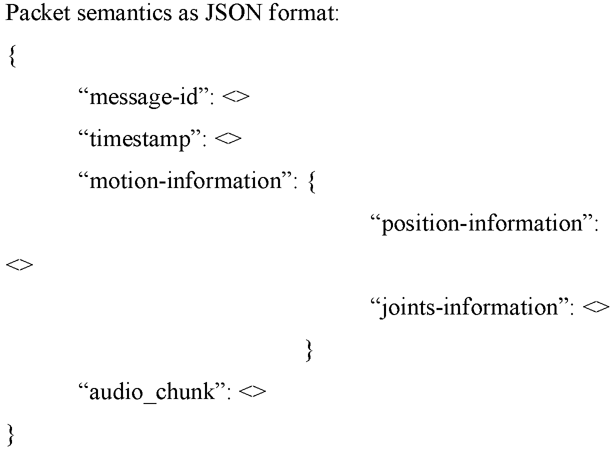

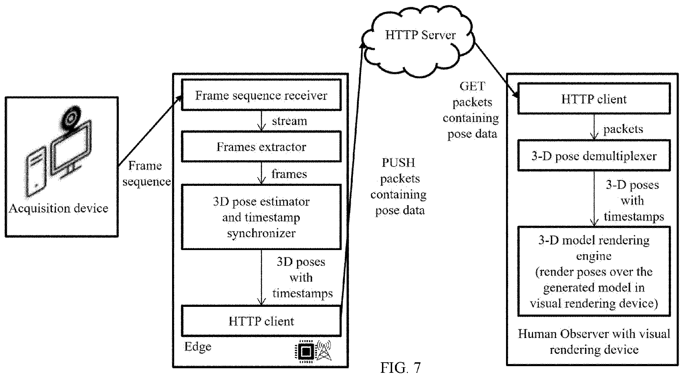

The JSON data created from the temporally consistent 3-D human pose and shape motion information of the remote human presenter and the one or more environmental parameters is transmitted to the relay node using "HTTP Server PUSH" over a secure HTTP (HTTPS) connection. The visual rendering device gathers the JSON data as a time-series using log poll through HTTP GET. FIG. 7 is an exemplary communication framework for real-time live telepresence with digital avatar of remote person, in accordance with some embodiments of the present disclosure.

At step 314 of the method 300, the one or more hardware processors 204 of the system 200 are configured to receive in real-time, the encoded motion information of the remote human presenter and the encoded environmental parameter information, at the visual rendering device of the human observer.

At step 316 of the method 300, the one or more hardware processors 204 of the system 200 are configured to decode the encoded motion information of the remote human presenter and the encoded environmental parameter information. Further, the encoded motion information of the remote human presenter is feed to a present state of the rendered digital avatar of the remote human presenter and the encoded environmental parameter information, at the live-rendering phase in real-time in the visual rendering device of the human observer to mimic the present state and the environment of the remote human presenter in the environment of the human observer.

The rendering is done on the visual rendering device of the human observer at a given framerate by synchronizing the time-stamp received with each JSON message with the local playback timer determined by the frame-rate. At each playback instant the corresponding JSON is extracted, and the name-value pair data (values) are fed to the present state of the rendered digital avatar (parametric human model) of the remote human presenter. The rendered digital avatar reflects the changes accordingly and thus mimics the present state of the remote human presenter. The model is initially anchored to the present scene captured by the visual rendering device and all subsequent movements happen considering the anchor point as the initial in situ spatial reference.

The methods and systems of the present disclosure accurately infer the human 3-D pose from simple image frames and rendering the inference onto a digital human model in real-time though the parametric digital human model for lifelike rendering which operates with remarkable efficiency compared to conventional systems. The conventional real-time motion capture products (mainly targeted for 3-D content creators) use specialized body sensor suits to transmit the body pose information explicitly. This enhances the cost as well as reduces the flexible democratized use of the application. The present disclosure achieves the real-time goal using only simple acquisition device (single image) without any specialized sensors.

The methods and systems of the present disclosure presents an effective way to convey body and facial cues in 3-D along with verbal communication with minimalistic network consumption. This is achieved by exclusively transmitting motion parameters rather than the entire 3-D mesh. Further, the methods and systems of the present disclosure presents first-of-its-kind basic working pipeline for a live digital human avatar mimicking a distant person (facing only the single acquisition device (an RGB camera) and without any wearable sensor) and create our own communication framework.

### Example Scenario:

The motion capture technique (the temporally consistent 3-D human pose and shape motion information) of the methods and systems of the present disclosure is implemented using PyTorch 1.8 and Cuda 11.1 and deployed it on an Intel Xeon (4 cores @ 2.90GHz) machine with 32Gb RAM and Nvidia Quadra P5000 GPU. For customer-side rendering, a Meta Oculus Pro VR Headset was used. The communication stack was built using C#. AWS was used as the public cloud instance and hosted it in three different locations Ohio (US), Tokyo (Japan), Mumbai (India). For connectivity, standard 4G dongles were employed.

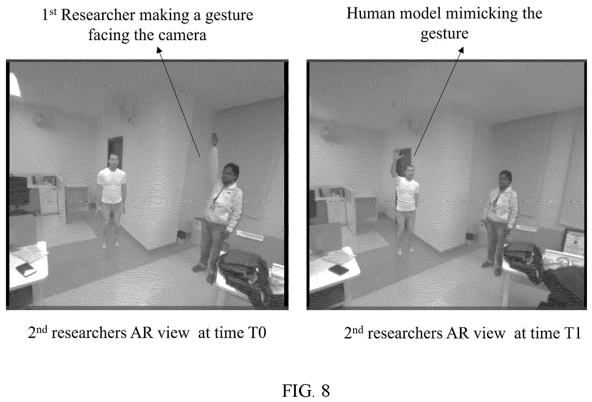

For performance testing, one of our researchers stood in front of the RGB camera role playing as the demonstrator (remote human presenter). A second researcher (human observer) watched the first researcher (remote human presenter). through the Oculus Pro Headset connected to the RGB camera acquisition system over AWS cloud and anchored the human model next to the first researcher. The view in the headset was cast live to a display and was recorded. Thus, the time lapse between the gesture made by the 1^{st} researcher and the same being performed by the human model was measured while the motion data was routed via three different locations: Ohio, Tokyo, and Mumbai to check the performance over three different long-haul Internet paths. The researchers were all located in Kolkata (India). FIG. 8 shows real-time actions as visualized at consecutive time instants through the AR glass, in accordance with some embodiments of the present disclosure.

To compare the performance of the motion capture technique, a small identical motion capturing pipeline was created using ExPOSE (conventional art) and compared the performance. Table 1 shows the results of the motion capture performance comparison.

**Table 1**

| Parameter | Present disclosure | ExPOSE |
|---|---|---|
| Execution time/frame | 100 ms | 250 ms |
| Temporal consistency | Yes | No |
| Acceleration error | 8.10 | 11.40 |

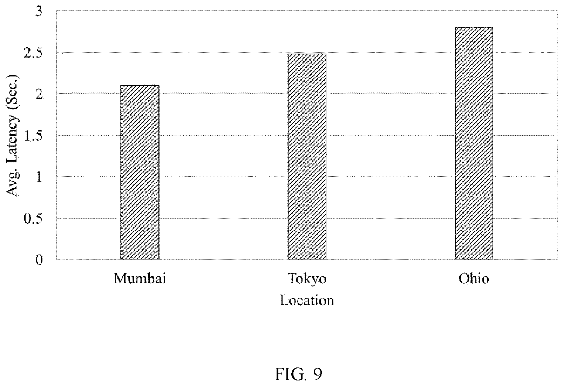

As shown in Table 1, the results clearly show the superior per frame prediction performance of the present disclosure. Then checked the latency of the system of the present disclosure is analyzed to check the delay between the gesture made by the actual person and the same being reflected by the model. This experiment was repeated by relaying the traffic through Mumbai, Tokyo, and Ohio. As expected, traffic routed through Mumbai performed better as both the acquisition and rendering was in Kolkata. FIG. 9 is a graph showing an average latency (in seconds) through servers in different locations, in accordance with some embodiments of the present disclosure.

Further, a brief market study on the potential of 3-D Telepresence using AR is conducted. The possibility that the remote individual's digital representations can be rendered over the real view by leveraging the promises of AR and visual computing advancements has indeed created a lot of expectations in the Telepresence market. This has the additional advantage of being able to do non-verbal communication just like in situ experiences. The present market size is USD 2.4 B and is poised to grow to USD 4.9 B with CAGR (2024-2029) 15.37%.

Thus, the present disclosure presents a bandwidth efficient 3-D Telepresence system where a person can live interact with a distant person through the digital full body 3-D model (aka Avatar) of the remote person using the visual rendering device. The digital avatar exactly replicates the instantaneous gestures of the remote person. The present disclosure does not require the remote person to put on any wearable sensors or body suits and a simple acquisition device suffices.

Presently, the methods and systems of the present disclosure was tested the pipeline in an all 4G network and is adapted to 5G and 6G networks as well with suitable tuning. The solution of the present disclosure is a pioneering business case to propose a new standardization thread from India (through Telecommunications Standards Development Society of India) to leverage networked native AI aspects of 6G into such real-time digital human applications. Though the present disclosure is explained with the business application of the product demonstrator and the user, the scope is not limited to other similar applications such as digital education (between the digital avatar of the teacher and the student), and other AR/VR applications.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of real-time live telepresence with digital avatar of remote person. The present disclosure presents a technologically advanced maker-less 3-D digital human-based bandwidth-efficient Telepresence solution called Tele-avatar. The disclosed solution promises to allow individuals to interact live with a remote person through both verbal and non-verbal communication via the parametric digital human avatar of the remote human presenter through the visual rendering device. Using innovative visual computing algorithms and communication techniques, the digital human avatar is rendered live in the premise of the second person using a single image representation such as a RGB image or a monocular image, and not requiring anybody-sensors. The system has a privacy advantage as the digital human avatar need not reveal the exact body of the remote human presenter and is just a digital self of the remote human presenter.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300), comprising:
initiating, via one or more hardware processors, a session for real-time live telepresence of a remote human presenter in an environment of a human observer, wherein an acquisition device is located in the environment of the remote human presenter and the human observer comprises a visual rendering device (302);
generating at an initial phase, via the one or more hardware processors, an initial digital avatar of the remote human presenter, using a 3-dimensional (3-D) human model, through the acquisition device (304);
transmitting at the initial phase, via the one or more hardware processors, the initial digital avatar of the remote human presenter along with an audio to the visual rendering device of the human observer through a public cloud infrastructure, wherein the initial digital avatar of the remote human presenter is subsequently rendered in the visual rendering device of the human observer to obtain a rendered digital avatar of the remote human presenter along with the audio at each instance (306);
estimating at a live rendering phase in real-time, via the one or more hardware processors, a temporally consistent 3-D human pose and shape motion information of the remote human presenter and one or more environmental parameters of the environment of the remote human presenter, from a frame sequence obtained through the acquisition device (308);
encoding in real-time, via the one or more hardware processors, the temporally consistent 3-D human pose and shape motion information of the remote human presenter and the one or more environmental parameters of the environment of the remote human presenter, using an encoding technique, to obtain an encoded motion information of the remote human presenter and an encoded environmental parameter information as a time-series data, wherein the encoding technique encodes and converts the temporally consistent 3-D human pose and shape motion information and the one or more environmental parameters of the environment of the remote human presenter into a data interchange format comprising one or more name-value pairs (310);
transmitting in real-time, via the one or more hardware processors, the encoded motion information of the remote human presenter and the encoded environmental parameter information, to the visual rendering device of the human observer, through the public cloud infrastructure using a predefined packet semantics and a predefined network topology (312);
receiving in real-time, via the one or more hardware processors, the encoded motion information of the remote human presenter and the encoded environmental parameter information, at the visual rendering device of the human observer (314); and
decoding and feeding at the live-rendering phase in real-time, via the one or more hardware processors, the encoded motion information of the remote human presenter to a present state of the rendered digital avatar of the remote human presenter and the encoded environmental parameter information, in the visual rendering device of the human observer to mimic the present state and the environment of the remote human presenter in the environment of the human observer (316).

2. The processor-implemented method (300) as claimed in claim 1, wherein generating at the initial phase, the initial digital avatar of the remote human presenter using the 3-D human model through the acquisition device, comprises:
capturing an image representation of the remote human presenter through the acquisition device located in the environment of the remote human presenter (304a);
estimating one or more normal maps from the image representation using the 3-D human model (304b);
converting the one or more normal maps into one or more partial surfaces, using the 3-D human model (304c); and
adding one or more missing geometries to the one or more partial surfaces using the 3-D human model, to generate the initial digital avatar of the remote human presenter, wherein the one or more missing geometries are associated with (i) a texture, (ii) a body shape, and (iii) one or more wearable garments (304d).

3. The processor-implemented method (300) as claimed in claim 1, wherein estimating at the live rendering phase in real-time, the temporally consistent 3-D human pose and shape motion information of the remote human presenter from the frame sequence obtained through the acquisition device, comprises:
selecting a set of consecutive frames within a temporal window, from the frame sequence obtained through the acquisition device (308a);
extracting one or more body-aware deep features from each of the set of consecutive frames (308b);
predicting one or more initial per-frame estimates comprising one or more body parameters of the remote human presenter and one or more device parameters of the acquisition device, from the associated one or more body-aware deep features (308c);
recovering one or more spatio-temporal features from the initial per-frame estimates, using one or more spatio-temporal feature aggregation techniques (308d); and
estimating the temporally consistent 3-D human pose and shape motion information of the remote human presenter, in real-time, from the one or more spatio-temporal features, using a motion estimation and refinement technique (308e).

4. A system (200) comprising:
a memory (202) storing instructions;
one or more input/output (I/O) interfaces (206);
one or more hardware processors (204) coupled to the memory (202) via the one or more I/O interfaces (206), wherein the one or more hardware processors (204) are configured by the instructions to:
initiate a session for real-time live telepresence of a remote human presenter in an environment of a human observer, wherein an acquisition device is located in the environment of the remote human presenter and the human observer comprises a visual rendering device;
generate at an initial phase, an initial digital avatar of the remote human presenter, using a 3-dimensional (3-D) human model, through the acquisition device;
transmit at the initial phase, the initial digital avatar of the remote human presenter along with an audio to the visual rendering device of the human observer through a public cloud infrastructure, wherein the initial digital avatar of the remote human presenter is subsequently rendered in the visual rendering device of the human observer to obtain a rendered digital avatar of the remote human presenter along with the audio at each instance;
estimate at a live rendering phase in real-time, a temporally consistent 3-D human pose and shape motion information of the remote human presenter and one or more environmental parameters of the environment of the remote human presenter, from a frame sequence obtained through the acquisition device;
encode in real-time, the temporally consistent 3-D human pose and shape motion information of the remote human presenter and the one or more environmental parameters of the environment of the remote human presenter, using an encoding technique, to obtain an encoded motion information of the remote human presenter and an encoded environmental parameter information as a time-series data, wherein the encoding technique encodes and converts the temporally consistent 3-D human pose and shape motion information and the one or more environmental parameters of the environment of the remote human presenter into a data interchange format comprising one or more name-value pairs;
transmit in real-time, the encoded motion information of the remote human presenter and the encoded environmental parameter information, to the visual rendering device of the human observer, through the public cloud infrastructure using a predefined packet semantics and a predefined network topology;
receive in real-time, the encoded motion information of the remote human presenter and the encoded environmental parameter information, at the visual rendering device of the human observer; and
decode and feed at the live-rendering phase in real-time, the encoded motion information of the remote human presenter to a present state of the rendered digital avatar of the remote human presenter and the encoded environmental parameter information, in the visual rendering device of the human observer to mimic the present state and the environment of the remote human presenter in the environment of the human observer.

5. The system (200) as claimed in claim 4, wherein the one or more hardware processors (204) are configured to generate at the initial phase, the initial digital avatar of the remote human presenter using the 3-D human model through the acquisition device, by:
capturing an image representation of the remote human presenter through the acquisition device located in the environment of the remote human presenter;
estimating one or more normal maps from the image representation using the 3-D human model;
converting the one or more normal maps into one or more partial surfaces, using the 3-D human model; and
adding one or more missing geometries to the one or more partial surfaces using the 3-D human model, to generate the initial digital avatar of the remote human presenter, wherein the one or more missing geometries are associated with (i) a texture, (ii) a body shape, and (iii) one or more wearable garments.

6. The system (200) as claimed in claim 4, wherein the one or more hardware processors (204) are configured to estimate at the live rendering phase in real-time, the temporally consistent 3-D human pose and shape motion information of the remote human presenter from the frame sequence obtained through the acquisition device, by:
selecting a set of consecutive frames within a temporal window, from the frame sequence obtained through the acquisition device;
extracting one or more body-aware deep features from each of the set of consecutive frames;
predicting one or more initial per-frame estimates comprising one or more body parameters of the remote human presenter and one or more device parameters of the acquisition device, from the associated one or more body-aware deep features;
recovering one or more spatio-temporal features from the initial per-frame estimates, using one or more spatio-temporal feature aggregation techniques; and
estimating the temporally consistent 3-D human pose and shape motion information of the remote human presenter, in real-time, from the one or more spatio-temporal features, using a motion estimation and refinement technique.

7. One or more non-transitory machine-readable information storage mediums comprising one or more instructions which when executed by one or more hardware processors cause:
initiating a session for real-time live telepresence of a remote human presenter in an environment of a human observer, wherein an acquisition device is located in the environment of the remote human presenter and the human observer comprises a visual rendering device;
generating at an initial phase, an initial digital avatar of the remote human presenter, using a 3-dimensional (3-D) human model, through the acquisition device;
transmitting at the initial phase, the initial digital avatar of the remote human presenter along with an audio to the visual rendering device of the human observer through a public cloud infrastructure, wherein the initial digital avatar of the remote human presenter is subsequently rendered in the visual rendering device of the human observer to obtain a rendered digital avatar of the remote human presenter along with the audio at each instance;
estimating at a live rendering phase in real-time, a temporally consistent 3-D human pose and shape motion information of the remote human presenter and one or more environmental parameters of the environment of the remote human presenter, from a frame sequence obtained through the acquisition device;
encoding in real-time, the temporally consistent 3-D human pose and shape motion information of the remote human presenter and the one or more environmental parameters of the environment of the remote human presenter, using an encoding technique, to obtain an encoded motion information of the remote human presenter and an encoded environmental parameter information as a time-series data, wherein the encoding technique encodes and converts the temporally consistent 3-D human pose and shape motion information and the one or more environmental parameters of the environment of the remote human presenter into a data interchange format comprising one or more name-value pairs;
transmitting in real-time, the encoded motion information of the remote human presenter and the encoded environmental parameter information, to the visual rendering device of the human observer, through the public cloud infrastructure using a predefined packet semantics and a predefined network topology;
receiving in real-time, the encoded motion information of the remote human presenter and the encoded environmental parameter information, at the visual rendering device of the human observer; and
decoding and feeding at the live-rendering phase in real-time, the encoded motion information of the remote human presenter to a present state of the rendered digital avatar of the remote human presenter and the encoded environmental parameter information, in the visual rendering device of the human observer to mimic the present state and the environment of the remote human presenter in the environment of the human observer.

8. The one or more non-transitory machine-readable information storage mediums of claim 7, wherein the one or more instructions for generating at the initial phase, the initial digital avatar of the remote human presenter using the 3-D human model through the acquisition device, comprises:
capturing an image representation of the remote human presenter through the acquisition device located in the environment of the remote human presenter;
estimating one or more normal maps from the image representation using the 3-D human model;
converting the one or more normal maps into one or more partial surfaces, using the 3-D human model; and
adding one or more missing geometries to the one or more partial surfaces using the 3-D human model, to generate the initial digital avatar of the remote human presenter, wherein the one or more missing geometries are associated with (i) a texture, (ii) a body shape, and (iii) one or more wearable garments.

9. The one or more non-transitory machine-readable information storage mediums of claim 7, wherein the one or more instructions for estimating at the live rendering phase in real-time, the temporally consistent 3-D human pose and shape motion information of the remote human presenter from the frame sequence obtained through the acquisition device, comprises:
selecting a set of consecutive frames within a temporal window, from the frame sequence obtained through the acquisition device;
extracting one or more body-aware deep features from each of the set of consecutive frames;
predicting one or more initial per-frame estimates comprising one or more body parameters of the remote human presenter and one or more device parameters of the acquisition device, from the associated one or more body-aware deep features;
recovering one or more spatio-temporal features from the initial per-frame estimates, using one or more spatio-temporal feature aggregation techniques; and
estimating the temporally consistent 3-D human pose and shape motion information of the remote human presenter, in real-time, from the one or more spatio-temporal features, using a motion estimation and refinement technique.
